Europäisches Patentamt

**European Patent Office**

Office européen des brevets

(11) Veröffentlichungsnummer: **0 071 231**

**A1**

(12) **EUROPÄISCHE PATENTANMELDUNG**

(21) Anmeldenummer: **82106745.1**

(22) Anmeldetag: **26.07.82**

(51) Int. Cl.³: **G 01 S 1/30**

(30) Priorität: **27.07.81 DE 3129490**

(43) Veröffentlichungstag der Anmeldung:
**09.02.83 Patentblatt 83/6**

(84) Benannte Vertragsstaaten:
**DE FR GB IT NL SE**

(71) Anmelder: **CETAB**
**Rosenlundsgatan 5**
**S-20041 Malmö(SE)**

(72) Erfinder: **Sihlbom, Anders**
**Hus 535**
**S-43084 Styrsoe(SE)**

(74) Vertreter: **von Bülow, Tam Axel Hans-Werner,**
**Dr. et al,**
**Patentanwälte Kern, Popp, Sajda und von Bülow**
**Widenmayerstrasse 48**
**D-8000 München 22(DE)**

(54) Ortungsverfahren und Ortungsgerät zu dessen Durchführung.

(57) Bei dem Ortungsverfahren werden die Phasenlagen mehrerer Perioden der Wellen eines ersten Senders gegenüber einem vorgegebenen Zeitbezugspunkt gemessen; daraus wird kongruent modulo der Wellenlänge ein Mittelwert gebildet und gespeichert. Anschließend wird in gleicher Weise der Mittelwert der Phasenlagen der Wellen mindestens eines weiteren Senders gebildet und dann die Differenz dieser Mittelwerte ermittelt. Aus mindestens zwei solchen Differenzen wird dann ein Standort ermittelt.

Das Ortungsgerät besitzt eingangsseitig eine phasenstarre Schleife (24), deren Ausgangsimpulse für eine vorgegebene Zeitdauer mit hoher Taktfrequenz in einen Speicher (38) eingelesen werden. Ein Rechner (54) bildet aus den gespeicherten Werten (Phasenlagen) den Mittelwert. Eine Steuereinheit (60, 68) schaltet dann auf einen weiteren Sender um, wobei die Umschaltzeit bis zum erneuten Verriegeln der phasenstarren Schleife (24) in einem Zähler (44) gemessen wird. Der Rechner (54) ermittelt dann aus dem neuen Speicherinhalt, der vorgegebenen Zeitdauer und der Umschaltzeit den Mittelwert der Phasenlagen des weiteren Senders.

./...

Croydon Printing Company Ltd

_Fig.1_

CETAB
Rosenlundsgatan 5
S-20041 Malmö/Schweden

## Beschreibung

Die Erfindung bezieht sich auf ein Ortungsverfahren, bei dem ortsabhängige Phasendifferenzen zwischen elektromagnetischen Wellen von mehreren, in fester Phasenbeziehung zueinander sendenden Sendern ermittelt werden, indem die ankommenden Wellen der einzelnen Sender zeitlich nacheinander abgetastet werden und senderweise die Phasenlagen der während einer vorgegebenen Zeitdauer auftretenden Nulldurchgänge gegenüber einem Bezugssignal gemessen werden, wobei aus der Differenz der ermittelten Phasenlagen der einzelnen Sender hyperbelförmige Standlinien erhalten werden.

Hyperbelnavagationsverfahren sind allgemein unter den Bezeichnungen "DECCA", "OMEGA" und "LORAN-C" bekannt, wobei sich die genannten Verfahren im wesentlichen durch die verwendete Frequenz, die Signalcodierung und die zeitliche Staffelung der Aussendung der elektromagnetischen Wellen von mehreren Sendern unterscheiden. Grundsätzlich sind bei all diesen Systemen mehrere, in der Regel ortsfeste Sender vorgesehen, die elektromagnetische Wellen mit bestimmter Codierung aussenden, wobei diese elektromagnetischen Wellen in festen Phasenbeziehungen bzw. zeitlichen Beziehungen zueinander stehen.

Es ist insbesondere für OMEGA-Empfänger bekannt, die Phasenlage der von den verschiedenen Sendern nacheinander einfallenden Signalen in einem Kanal mit den Phasen eines lokalen Oszillators zu vergleichen, den Vergleichswert zu speichern und aus gespeicherten Wertepaaren Hyperbel-Standlinien zu ermitteln (Radio Fernsehen Elektronik, 24 (1975) 8, S. 271-273).

Weiterhin ist es bekannt, diese Prozedur digital durchzuführen, wobei die Phasenlage der Nulldurchgänge der digitalisierten Empfangssignale zu den Signalen des lokalen Oszillators bestimmt wird, wobei mehrere solche Messungen aufeinanderfolgend während einer Abtast/Empfangsperiode eines Senders durchgeführt wird und in Abhängigkeit von dieser Vielzahl der Messungen die Phasenmeßeinrichtung nachgestimmt wird. (Proceedings of the Second Omega Symposium 1974, The Institute of Navigation, Washington; Seite 154-158 und Proceedings of the First Annual Meeting 1976 International Omega Association, Arlington; Seite 245-152).

Ein weitere OMEGA-Empfänger ist aus der US-PS 3 936 828 bekannt. Die an einer Antenne empfangenen elektromagnetischen Wellen werden mehreren parallelen Empfängern zugeleitet, wobei jedem Sender ein eigener Empfänger zugeordnet ist. Jeder Empfänger ist daher über entsprechende Filter auf die Arbeitsfrequenz des zugeordneten Senders abgestimmt. Die gefilterten und verstärkten Signale werden jeweils einer phasenstarren Schleife zugeführt. Diese phasenstarre Schleife, die allgemein auch mit PLL (phase locked loop) bezeichnet wird, dient bei dem dort beschriebenen OMEGA-System dazu, die ausgesandten OMEGA-Frequenzen phasenrichtig während der Sendepause des zugeordneten OMEGA-Senders zu speichern. Weiterhin werden die einzelnen OMEGA-Frequenzen in diesen PLLs in Teilern

-7-    0071231

auf eine Ausgangsfrequenz von 100 Hz heruntergeteilt.
Die 100 Hz-Ausgänge der einzelnen PLLs werden dann
phasenmäßig miteinander verglichen.

Nachteilig hieran ist der relativ hohe bauliche Aufwand
von je einer vollständigen Empfangsstufe für jeden
Sender. Weiterhin müssen die phasenstarren Schleifen
hochgenau arbeiten, da bereits geringe Phasenverschiebungen zu großen Meßfehlern führen. Hochgenaue phasenstarre Schleifen sind jedoch relativ teuer und haben den
wesentlichen Nachteil, daß sie relativ lange Zeit benötigen, bis sie mit der Frequenz und Phase der Eingangssignale synchronisiert bzw. "verriegelt" sind.

Aus der US-PS 3 602 812 ist ein mit den Frequenzen des
OMEGA-Systems arbeitendes Verfahren bekanntgeworden,
bei dem die relativen Phasen von aufeinanderfolgenden
Signalfolgen gemessen und mit um 90° verschobenen Signalfolgen multipliziert werden. Hieraus erhält man analoge
Signale, die den Sinus- und Kosinus-Werten der relativen
Phasen entsprechen. Diese analogen Signale werden in
digitale Signale umgewandelt und einem gemeinsamen
Rechner zugeführt. Für jeden Sender ist hierbei ein eigener Signalaufbereitungsschaltkreis vorgesehen.

Aus der US-PS 3 886 553 ist ein Navigationssystem bekanntgeworden, bei dem ein Sender an Bord eines Fahrzeuges oder Schiffes mitgeführt wird, wobei dessen Signale von mehreren an unterschiedlichen Orten aufgestellten Empfängern empfangen werden. Diese Empfänger tauschen untereinander die Werte, insbesondere die Phasenlage der empfangenen Signale aus, woraus die Phasendifferenz der an den einzelnen Empfängern ankommenden
Signale bestimmt werden kann. Hieraus läßt sich dann
die Position des Senders errechnen und über Funk an die
Sendestation übermitteln. Eine eigene                der
Position an Bord des Schiffes ist hierbei nicht möglich.

Aus der DE-OS 27 51 455 ist ein Verfahren zur Annäherungsanzeige zu umfahrender Bereiche auf dem Meer bekanntgeworden. Die Daten der Kontur des gefährlichen Bereiches sind hierbei in einem Speicher vorhanden. Sie werden ständig mit den Positionsdaten des Schiffes, die durch irgendein geeignetes Funknavigationsverfahren ermittelt werden, verglichen, worauf ein Warnsignal erzeugt wird, wenn die Position des Schiffes in der Nähe des gefährliches Bereiches liegt.

Aus der US-PS 4 138 680 ist ein OMEGA-Empfänger bekanntgeworden, bei dem eine gewünschte Frequenz der einzelnen OMEGA-Frequenzen durch selektives Abtasten zu vorbestimmten Zeitintervallen isoliert wird. Hierdurch werden Primärstörsignale unterdrückt.

Aus der DE-OS 23 31 546 ist ein Navigations- oder Ortungsgerät bekannt, das einen hochkonstanten Frequenzgeber, eine Phasenvergleichsstufe und eine Rechenstufe enthält, wobei der Frequenzgeber eine selbsttätige Nachstimmvorrichtung enthält.

Schließlich beschreibt die FR-PS 2 406 205 (DE-OS 28 43 956) ein mit den LORAN-C-Signalen arbeitendes System.

Ausgehend von dem Ortungsverfahren der Druckschriften "Proceedings of the Second Omega Symposium 1974 bzw. Proceedings of the First Annual Meeting 1976" ist es Aufgabe der vorliegenden Erfindung, das Ortungsverfahren der eingangs genannten Art dahingehend zu verbessern, daß eine größere Genauigkeit erhalten wird. Weiterhin soll ein Ortungsgerät zur Durchführung dieses Verfahrens geschaffen werden, das erheblich einfacher aufgebaut ist.

Diese Aufgabe wird erfindungsgemäß dadurch gelöst, daß die Phasenlagen aller während der jeweils vorgegebenen Zeitdauer auftretenden Nulldurchgänge eines entsprechenden Senders gegenüber einem vorgegebenen Bezugszeitpunkt gemessen werden, und daß aus diesen Phasenlagen ein Mittelwert der kongruent modulo der Periodendauer der abgetasteten Wellen liegenden Phasenlagen gebildet wird.

Im Gegensatz zu dem Ortungsverfahren der eingangs genannten Art werden die Phasenlagen der ankommenden Wellen also nicht mit den Schwingungen eines lokalen Oszillators verglichen. Vielmehr werden während eines Meßzyklus die Phasenlagen der Nulldurchgänge der ankommenden Wellen gegenüber einem einzigen Bezugszeitpunkt ermittelt, woraus dann derart ein Mittelwert gebildet wird, daß aus jeder dieser gemessenen Phasenlagen zuvor alle enthaltenen ganzzahligen Vielfachen der Periodendauer subtrahiert werden und dann der arithmetische Mittelwert gebildet wird. Dies läßt sich durch folgende Formel ausdrücken:

$$\varphi_1 = (\sum_{j=0}^{N} t_{1j} \cdot \omega_1 - j2\pi )/(N+1)$$

wobei $\varphi_1$ der Mittelwert der Phasenlage für den ersten Sender ist,

$t_{1j}$ der Zeitpunkt des j-ten Nulldurchganges der empfangenen Welle gegenüber dem gewählten Bezugszeitpunkt,

$\omega_1$ die Kreisfrequenz des ersten Senders und N die Anzahl der gemessenen Nulldurchgänge ist.

Bei Verwendung der DECCA-Frequenzen erhält man beispielsweise bei einer vorgegebenen Zeitdauer von 102,4 µs eine Anzahl von 7 bis 13 Einzelmessungen der Phasenlage, aus denen dann der Mittelwert gebildet wird.

Durch diese Mittelwertbildung wird die Meßgenauigkeit deutlich erhöht, da der Einfluß einzelner fehlerhafter Werte deutlich verringert wird.

Eine Weiterbildung der Erfindung besteht darin, daß die Umschaltzeitdauer für das Umschalten auf den anderen Sender gemessen wird, daß für die Messung der Phasenlagen der Wellen des anderen Senders ein neuer Bezugszeitpunkt gewählt wird, der dem Ende der Umschaltzeitdauer entspricht und daß eine Zeittransformation des neuen Bezugszeitpunktes auf den zuerst gewählten Bezugszeitpunkt durchgeführt wird.

Durch die Wahl des neuen Bezugszeitpunktes wird die Messung erheblich vereinfacht, wobei die Meßgenauigkeit durch die Zeittransformation weiterhin erhalten bleibt. Die Zeittransformation entspricht dabei einer Korrektur der Meßwerte um die Zeitdauer, die dem vorhergehenden Meßzyklus für den ersten Sender entspricht. Dies kann durch folgende Formel ausgedrückt werden:

$$\varphi_2 = \omega_2 (t_v + N_2) + \varphi_2^* - n_2 \cdot 2\pi$$

wobei $t_v$ die vorgegebene Zeitdauer für die Messung der Phasenlagen des ersten Senders,

$N_2$ die Umschaltzeitdauer,

$\omega_2$ die Kreisfrequenz des zweiten Senders,

$n_2$ die positive ganze Zahl von vollen Perioden der Wellen des zweiten Senders bezogen auf den ursprünglichen Bezugszeitpunkt ist, d.h.

$$n_2 = \text{integer} \ \frac{(t_v + N_2)\omega_2 + \varphi_2^*}{2\pi}$$

$\varphi_2^*$ der Mittelwert der Phasenlagen bezogen auf den neuen Bezugszeitpunkt ist.

Generell werden - wie an sich bekannt - die ankommenden elektromagnetischen Wellen vor der Phasenlagenmessung in rechteckförmige, digitale Signale umgewandelt. Dies geschieht mittels einer phasenstarren Schleife. Hierdurch wird zum einen das Signal/Rausch-Verhältnis und damit die Meßgenauigkeit verbessert und zum anderen ermöglicht, die nachfolgende Signalverarbeitung mit digitalen Bauelementen durchzuführen. Auch wird der bauliche Aufwand für die Phasenlagenmessung der digitalisierten Signale vereinfacht.

Werden Wellen von mehr als zwei Sendern abgetastet, wie z.B. bei der Messung der DECCA-Sender, so wird konsequenterweise der Meßvvorgang für die Bestimmung der Phasenlagen der Wellen des dritten bzw. jedes weiteren Senders analog zu Bestimmung der Phasenlage des zweiten Senders durchgeführt.

Beim DECCA-System ist es üblich, nur die Phasendifferenzen zwischen dem Hauptsender und den dort vorhandenen drei Nebensendern zu bilden. Mit der Erfindung können (wie beim OMEGA-System) nun auch die Phasendifferenzen zwischen den einzelnen Nebensendern ermittelt und ausgewertet werden, so daß man beispielsweise bei vier Sendern bis zu sechs Hyperbeln erhalten kann, die dann jeweils wieder miteinander zum Schnitt gebracht werden, woraus man bis zu 15 Standorte erhalten kann.

Nach einer Weiterbildung der Erfindung wird aus den Hyperbelschnittpunkten eine gewichtete Mittelwertbildung durchgeführt, wobei Hyperbeln, die auf Messungen basieren, bei denen die Abweichung der einzelnen Phasenlagen vom Mittelwert groß war, ein geringeres Gewicht zugeordnet wird, als Hyperbeln, die auf Messungen basieren, bei denen die Abweichungen der einzelnen Phasenlagen vom Mittelwert klein war. Mit anderen Worten wird guten Messungen ein höheres Gewicht zugeordnet als schlechten Messungen.

Hierdurch wird ebenfalls die Genauigkeit vergrößert.

Nach einer weiteren Fortbildung der Erfindung wird zusätzlich zu der gewichteten Mittelwertbildung der Schnittpunkte ein aus früherem Standort, Kurs, Geschwindigkeit und verstrichener Zeit ermittelter Standort verwendet. Dieser durch "Koppelrechnung" ermittelte "gegisste" Standort kann somit insbesondere bei schlechten Funkübertragungsverhältnissen einen weiteren Anhaltspunkt für den tatsächlichen Schiffsort geben.

Das Ortungsgerät zur Durchführung des Verfahrens enthält einen einstellbaren Empfänger, einen Bezugssignalgeber und einer Phasenmeßeinrichtung, die die Phase der empfangenen Signale mit einem Bezugssignal vergleicht, mit einem Speicher, in welchem die von der Phasenmeßeinrichtung ermittelten Vergleichssignale gespeichert werden, mit einem dem Speicher nachgeschalteten Rechner, der aus den gespeicherten Vergleichssignalen Differenzsignale der Phasen verschiedener Sender bildet und mit einer Steuereinrichtung, die den Empfänger auf den Empfang anderer Sendersignale umschaltet, wurde erfindungsgemäß dadurch verbessert, daß in den Speicher (38) die empfangenen Signale ab einem gewählten Bezugszeitpunkt ($t_0$, $t_1$...) für eine vorgegebene Zeitdauer ($t_v$) mit einer gegenüber der Frequenz der empfangenen Signale hohen Frequenz eingelesen werden, daß dem Speicher (38) ein Rechner (54) nachgeschaltet ist, in welchem aus den gespeicherten Signalen die Phasenlagen der Nulldurchgänge der Signale gegenüber dem gewählten Bezugszeitpunkt ermittelt werden und in welchem aus kongruent modulo der Wellenlänge der empfangenen Signale ein Mittelwert der Phasenlage ermittelt und gespeichert wird, daß ein Zähler (44) vorgesehen ist, der während der Umschaltzeitdauer ($N_2$) zwischen Ablauf der vorbestimmten Zeitdauer ($t_v$) und dem Beginn einer neuen Messung ($t_1$) nach dem Umschalten des Empfängers Impulse konstanter Frequenz zählt, wobei der Ausgang des Zählers (44) mit dem Rechner (54) verbunden ist und wobei der Rechner aus den nach dem Umschalten gespeicherten Signalen und dem Inhalt des Zählers (44) in analoger Weise den Mittelwert der Phasenlage der anderen Signale ermittelt, speichert und die Differenz der gespeicherten Phasenmittelwerte bildet.

In dem Speicher wird praktisch ein Abbild eines Teilausschnittes der empfangenen Wellen gespeichert, woraus dann in einfacher Weise von dem Rechner der Mittelwert gebildet werden kann.

Nach einer Weiterbildung des Ortungsgerätes ist dem Speicher und dem Zähler eine einstellbare phasenstarre Schleife vorgeschaltet, deren Eingang die empfangenen Signale zuführbar sind, wobei ein Ausgang der phasenstarren Schleife, der ein den Verriegelungszustand der phasenstarren Schleife anzeigendes Signal führt, mit einem Sperreingang des Zählers verbunden ist, dessen Starteingang mit einem Ausgang des Speichers verbunden ist, der ein Signal führt, das anzeigt, daß ein vorgegebener Speicherinhalt erreicht ist.

Wie oben erwähnt, dient die phasenstarre Schleife - wie an sich bekannt - der Verbesserung des Signal/Rausch-Verhältnisses und der Digitalisierung der empfangenen Signale. Hierdurch kann der Speicher als einfaches Schieberegister aufgebaut sein, dessen Speicherzellen bezogen auf die erste Speicherzelle die Phasenlage des in der entsprechenden Speicherzelle gespeicherten Impulses bezeichnet. Somit kann der Speicher praktisch direkt zur Phasenmessung herangezogen werden. Weiterhin wird der Speicher auch direkt zur Ermittlung bzw. Feststellung der vorgegebenen Zeitdauer verwendet, was dadurch geschieht, daß eine bestimmte Anzahl von Speicherplätzen, z.B. 1024, besetzt sind. Sobald an diesem entsprechenden Speicherplatz ein Signal eingeschrieben wurde, kann dieser Zustand an der entsprechenden Ausgangsleitung dieses
Speicherplatzes erkannt und zum Starten des Zählers
verwendet werden, in welchem die Umschaltzeitdauer
ermittelt wird. Die Beendigung der Umschaltzeitdauer
wird dadurch erkannt, daß ein neuer Meßvorgang begonnen
hat, was von der phasenstarren Schleife dadurch angezeigt
wird, daß an einem Ausgang ein Signal (sogenanntes Lock-
Signal) erscheint, welches anzeigt, daß die phasenstarre
Schleife neu verriegelt ist. Dieses Signal wird zum
Anhalten des Zählers verwendet. Somit ist in dem Zähler
genau ein Zählinhalt gespeichert, der der Umschaltezeitdauer entspricht. Die Ausgänge des Speichers und des
Zählers werden dann direkt dem Rechner zugeführt, welcher
die oben beschriebenen Funktionen ausführt.

Gemäß einer vorteilhaften Ausgestaltung der Erfindung
enthält der Speicher folgendes:

- ein mit dem Ausgang der phasenstarren Schleife (24) verbundenes Schieberegister (126),
- ein dem Schieberegister (126) nachgeschaltetes Pufferregister (128),
- einen dem Pufferregister (128) nachgeschalteten
  RAM-Speicher (124) mit einem Adressenzähler (122),
  wobei dem Schieberegister (126) und dem Adressenzähler (122) jeweils Taktimpulse zuführbar sind, und
- ein Flip-Flop (132), dessen einer Steuereingang (S-Eingang) mit dem den Verriegelungszustand anzeigenden Ausgang (36) der phasenstarren Schleife (24), dessen anderer Steuereingang (R-Eingang) mit einem Ausgang (134)
  des Adressenzählers (122), dessen einer Ausgang (Q)
  mit einem Bereitsetzeingang (G) des Adressenzählers (122)
  und dessen anderer Ausgang ($\overline{Q}$) mit einem Bereitsetzeingang des Zählers (44) verbunden ist, wobei an dem Ausgang (134) des Adressenzählers (122) dann ein Signal
  erscheint, wenn in dem Adressenzähler (122) eine vorbestimmte Anzahl von Taktimpulsen gezählt wurde.

Mit dieser Schaltungsanordnung wird in einfacher Weise ein ausreichend schneller Speicher mit großer Speicherkapazität geschaffen, dessen einzelne Bauteile besonders einfach zu Steuerfunktionen herangezogen werden können, wobei die wesentlichen Steuerfunktionen von dem Flip-Flop ausgeführt werden.

Nach einer Weiterbildung der Erfindung ist ein Ausgang des Zählers mit einer Notsendeeinrichtung verbunden, die ein Tiefpaßfilter, einen Verstärker und eine Steuereinrichtung enthält, wobei der Zähler zusätzlich als Tonfrequenzgenerator für die Notsendeeinrichtung dient. Durch diese Mehrfachfunktion des Zählers wird eine optimale Ausnutzung der zur Verfügung stehenden Bauelemente erhalten.

Im folgenden wird die Erfindung anhand eines Ausführungsbeispieles im Zusammenhang mit den Figuren ausführlicher erläutert. Es zeigt:

Figur 1     ein Funktionsschaltbild eines Ortungsgerätes nach der Erfindung;

Figur 2     eine Draufsicht auf ein Gerät, das die Vorrichtung gemäß Fig. 1 enthält;

Figur 3     eine Vorderansicht des Gerätes nach Fig. 2;

Figur 4 und
Figur 5     detailliertere Blockschaltbilder von Einzelteilen bzw. Baugruppen der Figur 1; und

Figur 6     ein Zeitdiagramm zur Erläuterung des Ortungsverfahrens nach der Erfindung.

Generell gibt es in den meisten Ländern mehrere zu "Ketten" zusammengefaßte Langwellensender für die Positionsbestimmung der Luft- und Seefahrt, die jedoch auch zur Positionsbestimmung an Land verwendbar sind. Obwohl in der nachfolgenden Beschreibung an manchen Stellen speziell auf das DECCA-System hingewiesen wird, sei hervorgehoben, daß die vorliegende Erfindung auch bei anderen Systemen anwendbar ist, beispielsweise bei dem OMEGA-System, dem LORAN-C-System sowie auch bei Satellitennavigationssystemen, sofern diese nach dem Hyperbelverfahren arbeiten. Zum besseren Verständnis der Erfindung seien kurz die Grundzüge des DECCA-Systems geschildert. Ein Hauptsender und drei Nebensender sind jeweils zu einer "Kette" zusammengefaßt und senden in fester Phasenbeziehung zueinander elektromagnetische Wellen mit den Frequenzen $6f_0$ (Hauptsender) bzw. $8f_0$, $9f_0$ und $5f_0$ (Nebensender). $f_0$ bezeichnet hierbei die "Grundfrequenz" der jeweiligen Kette. Während einer kontinuierlichen Sendephase von 12,5 s senden alle Sender gleichzeitig auf ihrer jeweiligen Frequenz. Nach 12,5 s sendet der Hauptsender für 0,5 s gleichzeitig auf allen vier Frequenzen kurze Impulse, die dazu dienen, eine Grobmessung durchzuführen, d.h. zu bestimmen, in welchem groben Bereich, d.h. volle Wellenlänge der entsprechenden Frequenz man sich befindet. Anschließend senden alle Sender für 2,5 s auf ihrer eigenen Frequenz, worauf dann der erste Nebensender für 0,5 s entsprechende Impulse auf allen vier Frequenzen abgibt, usw. ...

Bei herkömmlichen DECCA-Empfängern werden die vier Frequenzen in vier verschiedenen Empfangseinrichtungen empfangen, zu einer gemeinsamen Zwischenfrequenz gemischt, worauf dann in "Phasendiskriminatoren" die Phasendifferenzen zwischen den Wellen des Hauptsenders und der entsprechenden Nebensender gemessen und - meist mechanisch - angezeigt werden.

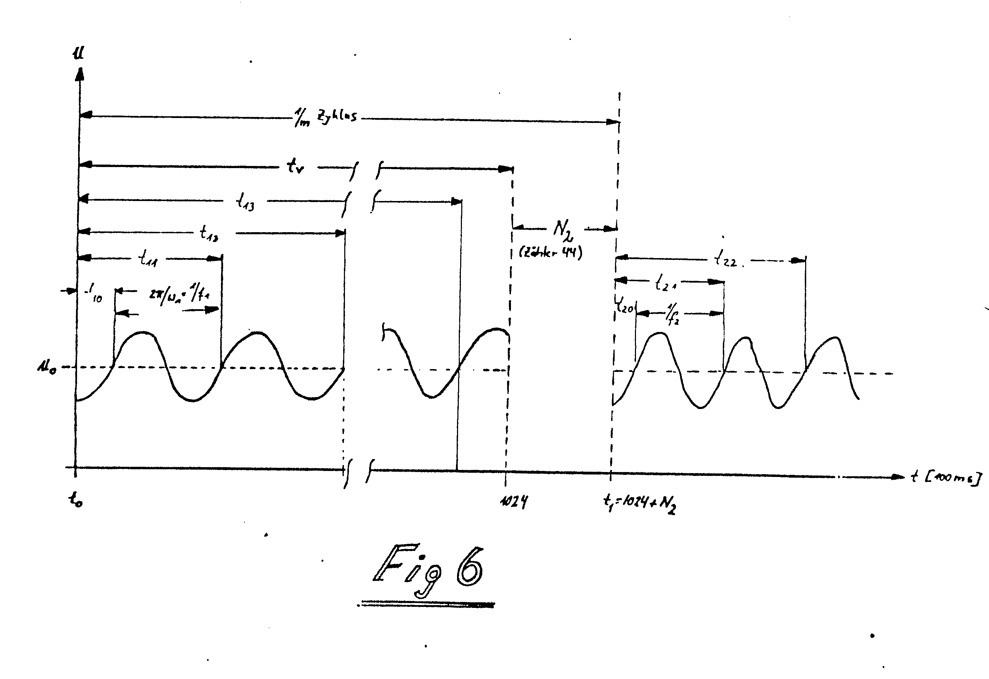

Bei der vorliegenden Erfindung werden die einzelnen ausgesandten Wellen zeitlich nacheinander kurzfristig, z.B. für 100 Mikrosekunden abgetastet. Im einzelnen sei zunächst auf Fig. 6 Bezug genommen. Zum Zeitpunkt $t_0$ wird ein Meßvorgang gestartet, wodurch ein fiktiver Zeit-Nullpunkt, der im folgenden als Bezugszeitpunkt bezeichnet wird, festgelegt wird. Ab diesem Moment wird die Trägerwelle eines ersten Senders für eine vorgegebene Zeitdauer $t_v$ von ca. 100 Mikrosekunden eingetastet. Die Zeitdauer $t_{10}$ zwischen dem Bezugszeitpunkt $t_0$ und dem ersten Nulldurchgang der abgetasteten Trägerwelle bestimmt die Phasenlage $\omega_{1\ 0}$ dieses ersten Senders. Je nach Frequenz dieses Senders werden während der vorbestimmten Zeitdauer $t_v$ zwischen 7 und 13 volle Trägerwellen abgetastet. Es werden dann auch die Phasenlagen der weiteren vollen Perioden der Trägerwellen, d.h. die Zeiten $t_{11}$, $t_{12}$,...... $t_{13}$ gemessen. Von den Werten der gemessenen Phasenlagen wird dann kongruent modulo der Wellenlänge der Trägerwelle des ersten Senders ein Mittelwert gebildet und zwar gemäß folgender Formel:

$$\left( \sum_{j=0}^{N} t_{ij}\omega_1 - j2\pi \right) \Big/ (N+1)$$

wobei $t_{ij}$ der entsprechende Zeitpunkt des j-ten Nulldurchganges,

$\omega_1$ die Kreisfrequenz ($2\pi f_1$) der Trägerwelle des ersten Senders und

N die Anzahl der Messungen ist. Nach Ablauf der vorgegebenen Zeitdauer $t_v$ wird der Empfänger auf den nächsten Sender umgeschaltet, wobei die Umschaltzeitdauer $N_2$ gemessen wird. Diese Zeitdauer endet zum Zeitpunkt $t_1$, zu dem ein neuer Teil-Meßzyklus beginnt. In diesem neuen Teil-Meßzyklus werden nun in gleicher Weise für den nächsten Sender die Phasenlagen gemessen und zwar bezogen auf den Zeitpunkt $t_1$, woraus analog zur oben

angegebenen Formel der Mittelwert $\omega_2^*$ der Phasenlagen für den zweiten Sender ermittelt wird. Dieser Vorgang wird dann für den dritten und vierten bzw. jeden weiteren Sender in entsprechender Weise durchgeführt.

Anschließend wird eine Korrektur durchgeführt, die berücksichtigt, daß für die einzelnen Teil-Meßzyklen jeweils unterschiedliche Bezugszeitpunkte gewählt wurden. Diese Korrektur beinhaltet eine Zeittransformation, mit der die einzelnen Meßergebnisse auf den Bezugszeitpunkt $t_0$ rücktransformiert werden. Dies kann durch folgende Formel ausgedrückt werden:

$$\varphi_2 = \omega_2 (t_v + N_2) + \varphi_2^* - n_2 \cdot 2\pi$$

wobei

$t_v$ die für alle Meßzyklen fest vorgegebene Zeitdauer,

$N_2$ die erwähnte Umschaltzeitdauer,

$\omega_2$ die Kreisfrequenz des Senders 2,

$n_2$ die positive ganze Zahl von vollen Perioden der Wellen des zweiten Senders bezogen auf den Zeitpunkt $t_0$ (d. h. von $t_0$ bis $t_1$)

$\varphi_2^*$ der Mittelwert der Phasenlagen für den zweiten Sender bezogen auf den Zeitpunkt $t_1$ ist.

Entsprechendes wird auch für die Sender 3 und 4 durchgeführt, d.h. es werden $\omega_3$ bzw. $\omega_4$ bestimmt.

Aus diesen Werten werden dann z.B. folgende Differenzen gebildet:

$$\Delta\varphi_1 = \varphi_1 - \varphi_2$$
$$\Delta\varphi_2 = \varphi_1 - \varphi_3$$
$$\Delta\varphi_3 = \varphi_1 - \varphi_4$$

und gegebenenfalls die weiteren Differenzen, wie z.B.

$$\Delta\varphi_4 = \varphi_2 - \varphi_3 \text{ usw.}$$

Diese Differenzen bezeichnen geometrisch gesehen Hyperbeln, die bekanntlich als Ortskurve konstanter Differenz zwischen zwei Punkten definiert sind.

Bei herkömmlichen DECCA-Empfängern werden lediglich die oben erwähnten Differenzen $\Delta\varphi_1$ bis $\Delta\varphi_3$ gebildet. Aus entsprechenden DECCA-Seekarten, in die die einzelnen Hyperbeln eingedruckt sind, kann dann der "Schiffsort" als Schnittpunkt der einzelnen Hyperbeln ermittelt werden. Bei der vorliegenden Erfindung werden in einem Rechner die den entsprechenden Differenzen zugeordneten Hyperbeln errechnet, wobei selbstverständlich die Ortskoordinaten der einzelnen Sender bekannt sein müssen. Zuerst erhält man Hyperbeln, die in einem Koordinatensystem definiert sind, das durch die Verbindungslinie der beiden ausgewerteten Sender und die Mittelsenkrechte auf dieser Verbindungslinie definiert ist. Die einzelnen Hyperbeln werden dann mittels Koordinatentransformationen (Drehung des Koordinatensystems) in ein gemeinsames Koordinatensystem gebracht, das vorzugsweise dem üblichen Nord/Süd-Koordinatensystem der Navigation entspricht.

Anschließend werden die Hyperbeln in dem transformierten Koordinatensystem mit einander zum Schnitt gebracht, woraus man im Idealfalle einen, in der Praxis jedoch meist mehrerer Schnittpunkte der einzelnen Hyperbeln erhält.

Sofern man mehrere Schnittpunkte erhält, wird hieraus über eine, vorzugsweise gewichtete, Mittelwertbildung ein einziger Schiffsort ermittelt. Die Gewichtung entspricht dabei der Qualität der Meßergebnisse, die beispielsweise dadurch festgestellt werden kann, daß bei der oben erwähnten Mittelwertbildung für die Phasenlage eine große bzw. eine kleine Streuung aufgetreten ist. Hyperbeln bzw. Schnittpunkten, denen Messungen mit großer Streuung zugrundelagen, erhalten hierbei ein geringeres Gewicht als bessere Messungen mit geringerer Streuung.

Auch kann eine Gewichtung dahingehend eingeführt werden, daß Schnittpunkte von Hyperbeln, die sich unter spitzem Winkel schneiden (sogenannte schleifende Schnitte) geringer bewertet werden als Schnittpunkte von Hyperbeln, die sich unter stumpferem Winkel schneiden.

Schließlich kann für die Mittelwertbildung der einzelnen "Orte" auch noch der durch Koppelrechnung ermittelte, gegißte Schiffsort herangezogen werden, der insbesondere bei sehr schlechten Funkübertragungsbedingungen einen brauchbaren Anhalt für den tatsächlichen Schiffsort geben kann. Auch dieser gegißte Schiffsort wird jedoch hier mit einem Gewichtsfaktor versehen.

Ein Meßvorgang für vier verschiedene Frequenzen dauert beispielsweise 1 ms. Bei der vorliegenden Erfindung wird ca. alle 2,67 ms ein neuer Meßzyklus eingeleitet, jedoch bei dem DECCA-System nur dann, wenn die Sender in der kontinuierlichen Phase sind. Mit den sogenannten Multipuls-Impulsen der Sender können andere Messungen durchgeführt werden, wie bei herkömmlichen DECCA-Systemen bekannt.

Es sei noch angeführt, daß die Formeln zur Bestimmung der Hyperbeln, zur Koordinatentransformation, zum Ermitteln des Schnittpunktes zweier Hyperbeln sowie zur gewichteten Mittelwertbildung mehrerer Schiffsorte allgemein bekannt sind und daher hier nicht näher erläutert werden müssen.

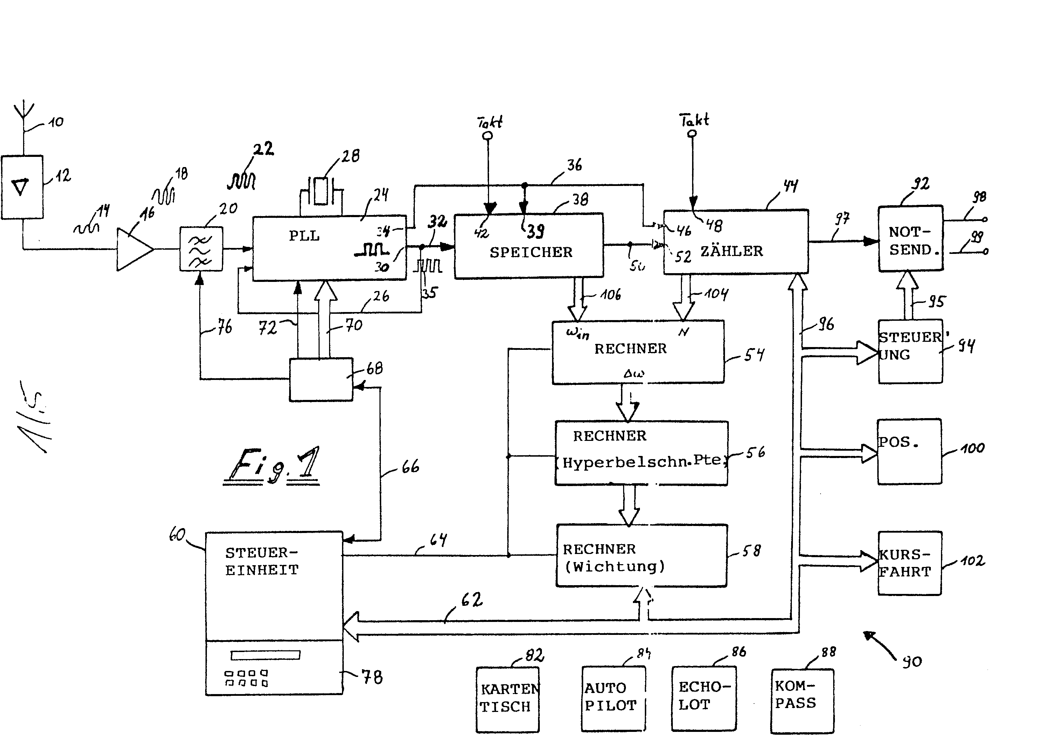

Im folgenden sei auf Figur 1 Bezug genommen. Diese Figur zeigt ein Funktions-Blockschaltbild einer Vorrichtung zur Durchführung des Verfahrens nach der Erfindung. Eine Antenne 10 ist mit einem Vorverstärker verbunden, dessen Ausgangssignal 14 noch alle empfangenen Frequenzen enthält und einem Verstärker 16 zugeführt wird, der eine Bandpaßfilter-Charakteristik aufweist und Frequenzen im Bereich von beispielsweise 60 bis 140 kHz durchläßt. Es wird also in dem Verstärker 16 eine grobe Filterung durchgeführt. Das Ausgangssignal 18 des Verstärkers 16 wird einem einstellbaren Bandpaßfilter 20 mit einer schmalen Durchlaßbandbreite zugeführt, die bei Auswertung der DECCA-Frequenzen beispielsweise 3 kHz beträgt. Das Ausgangssignal 22 des Bandpaßfilters 20 wird einer phasenstarren Schleife, im folgenden PLL 24 genannt, zugeführt, die einen intern einstellbaren Teiler enthält. Dieser Teiler ist über Signale auf einer Leitung 70 einstellbar, wodurch die PLL 24 auf der Frequenz des Signales 22 verriegelt wird. Zu der PLL 24 gehört auch noch eine Kopplungsleitung 26, die vom Ausgang 30 der PLL zu einem Eingang rückgeführt ist. Weiterhin gehört noch ein Quarz 28 zur PLL. Dieser Quarz kann beispielsweise auf 12 MHz schwingen. Er benötigt eine Genauigkeit von einigen $10^{-6}$. Es ist weder wünschenswert, diese Genauigkeit stark zu erhöhen, da hierdurch die Zeitdauer bis zum Verriegeln der PLL zu stark vergrößert wird, noch weit unter diesen Wert zu legen, da sonst die phasenstarre Schleife nicht exakt genug auf die empfangene Eingangsfrequenz verriegelt wird.

Das am Ausgang 30 der PLL 24 erscheinende Ausgangssignal wird über eine Leitung 32 einem Dateneingang 40 eines Speichers 38 zugeführt. Einem Takteingang 42 des Speichers 38 werden Taktimpulse von beispielsweise 10 MHz zugeführt. Der Speicher enthält letztlich ein Abbild der jeweiligen Eingangssignale bzw. der Trägerwelle des jeweils abgetasteten Senders, wobei die Trägerwelle jedoch durch die PLL 24 in ein rechteckförmiges, digitales Signal 35 umgewandelt wurde.

Der Speicher 38 besitzt einen Steuereingang 39, dem über eine Leitung 36 ein Steuersignal aus dem Ausgang 34 der PLL 24 zugeführt wird. Es handelt sich dabei um den sog. Lock-Ausgang, an dem dann ein Signal erscheint, wenn die PLL 24 verriegelt ist.

Ein Zähler 44 besitzt zwei Steuereingänge 46 und 52 sowie einen Takteingang bzw. Zähleingang 48, wobei letzterem Taktimpulse von beispielsweise 10 MHz zugeführt werden. Der Steuereingang 52 (Start-Eingang) erhält über eine Leitung 50 ein Signal von dem Speicher 38, das anzeigt, daß ein Speicherbereich voll ist, was bedeutet, daß die vorbestimmte Zeitdauer $t_v$ (Fig.6) verstrichen ist. Sobald dieses Signal erscheint, beginnt der Zähler 44 die Impulse an seinem Takteingang 48 zu zählen. Dieses Zählen wird durch das nächstfolgende Lock-Signal auf der Leitung 36 gestoppt. Dies bedeutet, daß der nächste Abtastvorgang begonnen hat.

Die in dem Speicher 38 gespeicherten Daten werden über einen Datenbus 106 einem programmierbaren Rechner 54 zugeführt. Weiterhin werden dem programmierbaren Rechner 54 über einen Datenbus 104 Daten, die dem Zählinhalt des Zählers 44 entsprechen, zugeführt.

Der programmierbare Rechner 54 berechnet bzw. ermittelt die Phasenlagen ($\varphi_1$ ... $\varphi_4$) sowie die Phasendifferenzen ( $\Delta\varphi_1$, ... $\Delta\varphi_1$), wie oben im Zusammenhang mit Fig. 6 erläutert wurde.

Die Ausgänge des programmierbaren Rechners 54 sind mit den Eingängen eines weiteren programmierbaren Rechners 56 verbunden, in welchem die "Hyperbeln" ermittelt, die entsprechende Koordinatentransformationen durchgeführt und die Schnittpunkte der Hyperbeln berechnet werden.

An diesen Rechner 56 ist ein weiterer programmierbarer Rechner 58 angeschlossen, in welchem eine Analyse, d.h. Gewichtung durchgeführt wird, sowie die Berechnung eines neuen "Ortes". Die Ausgänge des programmierbaren Rechners 58 werden über einen Datenbus 62 einer Steuereinheit 60 zugeführt, welche ihrerseits mit einer Konsoleinheit 78 verbunden ist. Der Datenbus 62 überträgt Daten in beiden Richtungen. Weiterhin ist die Steuereinheit 60 über eine Steuerleitung 64 mit einem Steuereingang des programmierbaren Rechners 58 verbunden. Die Steuereinheit 60 ist funktionsmäßig das Operator-Communication-Interface, das erlaubt, externe Steuerbefehle einzugeben, wie z.B. grobe Vorgabe eines Ortes bzw. Ortsbereiches, Vorgabe des für die Anzeige gewünschten Wertes, wie z.B. Position, Kurs, Fahrt etc.

Weiterhin ist die Steuereinheit 60 über eine Steuerleitung 66 mit einer Steuereinheit 68 verbunden (Signalfluß in beiden Richtungen), wobei die Steuereinheit 68 die erwähnten Signale auf der Leitung 70 erzeugt sowie weitere Signale auf einer Leitung 76, die dem Bandpaßfilter 20 zugeführt werden. Diese letzteren Signale schalten das Bandpaßfilter 20 auf einen bestimmten Sender um. Über eine Leitung 72 gibt die Steuereinheit 68 EIN/AUS-Schaltsignale an einen Eingang 74 der PLL 24 ab.

Die Datenausgänge des programmierbaren Rechners 58 sind über den Datenbus 62 auch mit einem Rechnermodul 100 (Position), einem Rechnermodul 102 (Kurs, Fahrt) und einer Steuerung 94 (für einen Notsender) verbunden.

Die Steuerung 94 für den Notsender ist über einen weiteren Datenbus 95 mit einem Notsender 92 verbunden. Der Notsender 92 empfängt über eine Leitung 97 Tonfrequenzsignale von dem Zähler 44. Diese Tonfrequenzsignale auf der Leitung 97 sind über die Steuerung 94 veränderbar, was über entsprechende Steuersignale auf einem Datenbus 96 erfolgt.

Der Notsender 92 gibt auf einer Leitung 98 ein Einschalt/Ausschalt-Signal ab, sowie auf einer Leitung 99
ein codiertes Signal in FSK ASCII-Code (Standardformat)
als tonmodulierte Nachricht ab.

Die in Fig. 1 mit der strichlierten Linie umrandeten
Bauteile können zusammengefaßt als EDV-Einheit 90
bezeichnet werden, in welcher die "Datenverarbeitung"
durchgeführt wird. (Im Gegensatz zur Meßwerterfassung).

Die programmierbaren Rechner 54 und 56 sind über Steuerleitungen ebenfalls mit der Steuereinheit 60 verbunden,
da in den Rechnern 54 und 56 unterschiedliche Berechnungen zu unterschiedlichen Zeitpunkten durchgeführt werden, was im einzelnen von der Steuereinheit 60 bestimmt
wird.

In dem programmierbaren Rechner 58 wird aus den errechneten Orten (Hyperbelschnittpunkte) zusammen mit
einem aus früheren Orten, Kurs und Geschwindigkeit errechneten vorausbestimmten Ort eine neue Position
berechnet gemäß folgender Formel:

$$\text{Neue POS}_x = D \times (\text{vorausbestimmte POS}_x) + \sum_{j=1}^{N} \text{POS}_{xj})/(D+N)$$

und ebenso für die Y-Koordinate der neuen Position.

D = eine "Dämpfungszahl", die ganzzahlig zwischen 1 und
10 liegen kann. Durch sie wird die Gewichtung des vorausbestimmten Ortes (Vorauskopplung) im Verhältnis zu den
gemessenen Werten bestimmt. Dieser Wert wird vom Operator eingestellt und zwar so, daß bei guten Funkübertragungsbedingungen das Gewicht des vorausberechneten
Ortes gering ist, während bei schlechteren Bedingungen,
wie z.B. bei großer Entfernung zu den Sendern, bei atmosphärischen Störungen usw. der Einfluß des vorausberechneten Ortes größer wird, da unter schlechten Bedingungen möglichst alle zur Verfügung stehenden Informationen ausgenutzt werden sollten.

Die Berechnung des vorausbestimmten Ortes erfolgt in den Rechnermodulen 100 bzw. 102. Weiterhin sind Zusatzmodule 82, 84, 86 und 88 vorgesehen, von denen der Zusatzmodul 82 ein "Kartentischmodul" ist, welcher einen Lichtpunkt auf eine auf dem Kartentisch ausgebreitete Seekarte projiziert, so daß der jeweilige Schiffsort auf der Seekarte optisch sichtbar gemacht werden kann. Der Zusatzmodul 84 ist ein Autopilot-Zusatzmodul, über den ein Vorgabewert einer Selbststeueranlage gemäß dem zuletzt bestimmten Schiffsort verändert werden kann. Mit 86 ist ein Echolot-Zusatzmodul bezeichnet, der in Verbindung mit einer ferngesteuerten Steueranlage für das Schiff dieses beispielsweise automatisch längs einer bestimmten Tiefenkurve steuert, so daß das System auch für Fischereizwecke einsetzbar ist. Mit 88 ist ein Kompaßmodul bezeichnet, über den der jeweils anlegende Kompaßkurs in das Gesamtsystem eingegeben werden kann.

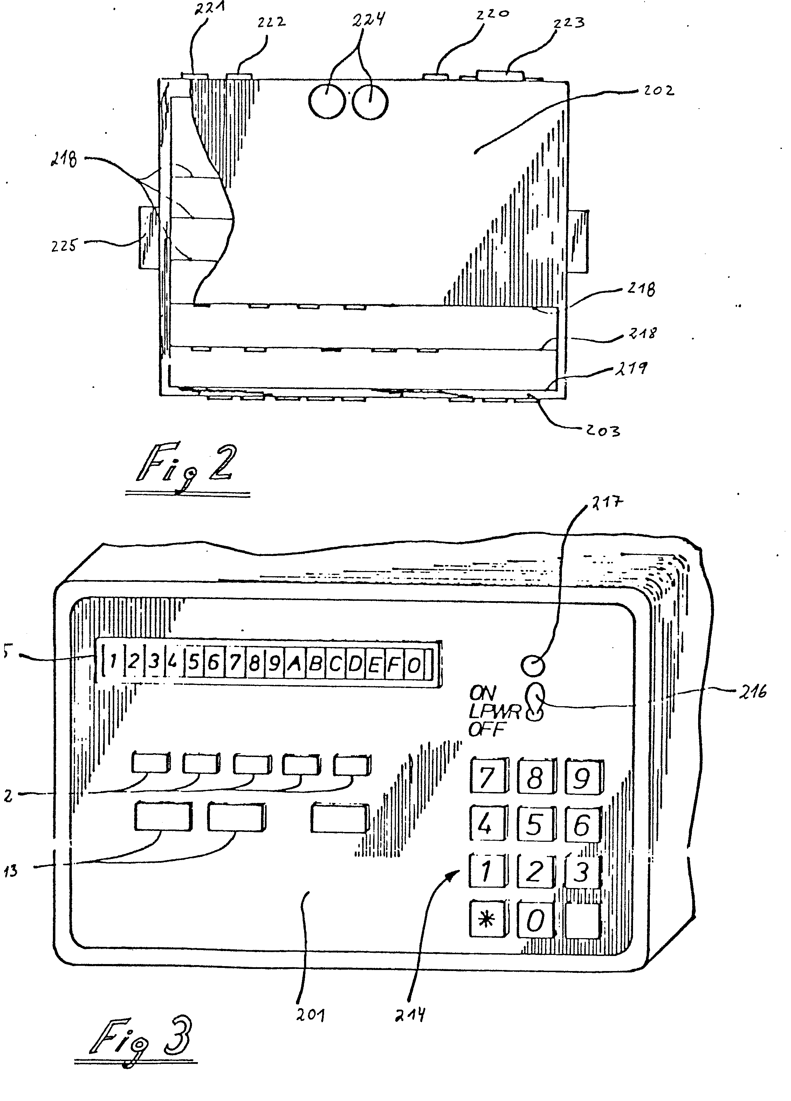

Im Zusammenhang mit den Fig. 2 und 3 sei kurz der gerätemäßige Aufbau erläutert.

Die gesamte Vorrichtung wird in ein Gehäuse eingebaut, das mit Befestigungseinrichtungen versehen ist, wie in Fig. 2 angedeutet. Das Gehäuse weist eine Frontplatte 201 sowie eine Deckplatte 202 auf, wobei die Frontplatte Funktionsknöpfe 212 und 213, eine Tastatur 214, eine beispielsweise aus 16 Zeichen bestehende alphanumerische Anzeige 215, einen Schalter 216, sowie eine Leuchtanzeige 217 aufweist. Der Boden des Gerätes ist mit 203 bezeichnet.

0071231

Im Inneren des Gehäuses ist eine Grundplatte montiert, die Anschlußmöglichkeiten für gedruckte Schaltungen 218 bietet, während weiterer Raum in Form von Reserveplätzen 219 vorgesehen ist, um zusätzliche Module einzubauen. Eine in der Zeichnung nicht eigens dargestellte Kontaktanordnung ist direkt hinter der Frontplatte 201 vorgesehen und ermöglicht es, die Funktionsknöpfe und die Anzeige direkt auf der gedruckten Schaltungen 218 zu montieren. Ferner ist die Grundplatte mit einer Standardversorgung ausgerüstet, so daß es möglich ist, die verschiedenen gedruckten Schaltungen 218 wahlweise im Gehäuse anzuordnen.

Auf der Rückseite des Gehäuses befinden sich elektrische Anschlüsse 220 für die Spannungsversorgung mit 12 oder 24 Volt, ein Antennenanschluß 221, ein Notsenderanschluß 222, ein Anschluß 223 für einen Spannungsregler sowie für Sicherheitsbatterien 224. Die in Fig. 3 dargestellten Baugruppen sind auf einer gedruckten Schaltung direkt hinter der Frontplatte 201 angebracht. Der Bedienungsmann kann über Funktionsknöpfe 212 und 213 gemäß Fig. 3 Informationen vom System abrufen und über die Tastatur 214 Daten eingeben.

Durch die geeignete Anordnung der Funktionsknöpfe 212 und 213 kann man in übersichtlicher Weise eine Vielzahl von Funktionen bzw. Befehlen eingeben, wobei mit diesen Funktionsknöpfen insgesamt eine Vielzahl von Möglichkeiten zum Auslesen und Ausdrucken besteht. Dabei kann man das Gerät in der Grundausführung mit einer bestimmten Anzahl von Funktionen ausstatten, die ggfs. noch ausgebaut werden können, ohne man die Frontplatte 201 deswegen zu ändern braucht.

Das Gerät ist mit einem Umschalter 216 ausgerüstet, der drei Betriebsstellungen einnehmen kann: In der Stellung ON ist die Spannung ständig eingeschaltet, in der Stel-

lung OFF ist sie ständig abgeschaltet und in der Stellung
LPWR ist das Gerät in einer Bereitschaftsstellung, in der
es beispielsweise nur für die Dauer von etwa 20 s arbeitet und zwar z.B. alle 20 min oder, wenn das Gerät in einer
in der Tastatur 214 vorgesehenen Taste mit einem * betätigt wird, für die Dauer von etwa 1 min nach dem letzten
eingegebenen Befehl an das Gerät, während anschließend
die Spannung zur Energieeinsparung abgeschaltet wird.

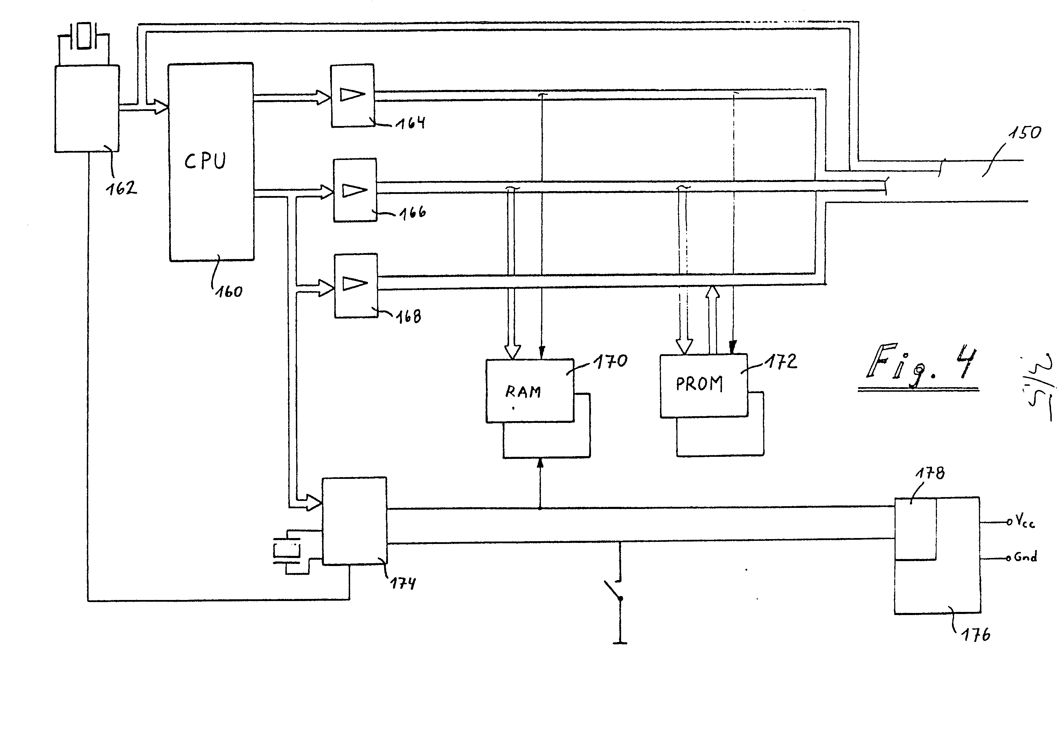

Die Leuchtanzeige 217 dient zur Anzeige, ob die Spannung
eingeschaltet oder abgeschaltet ist. Unabhängig von dieser Spannung arbeitet jedoch eine Quarzuhr 174(in Fig. 4)
als Zeitbasiseinheit des Gerätes die ganze Zeit über,
während auch der Datenspeicher des Gerätes ständig von
der Sicherheitsbatterie 224 mit Spannung versorgt wird.

Für die gedruckten Schaltungen können genormte Formate
mit entsprechenden genormten Kontaktanschlüssen verwendet
werden, so daß diese gedruckten Schaltungen ohne weiteres
an die Versorgungs- und Datenleitungen der Grundplatte
angeschlossen werden können.

Mit 225 ist noch eine Befestigungseinrichtung bzw. Halterung angedeutet.

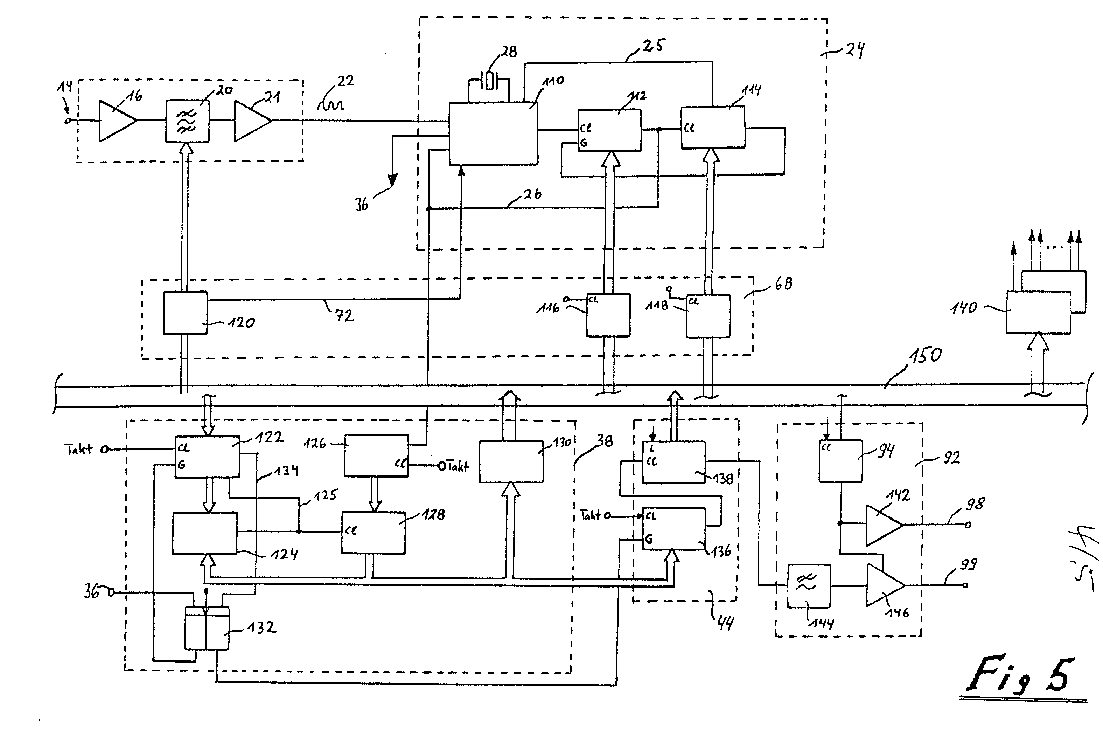

Im folgenden sei auf die Figuren 4 und 5 Bezug genommen.
Die Bezugszeichen dieser Figuren wurden - soweit als
möglich - in Übereinstimmung mit Fig. 1 gewählt.

Das Eingangssignal von der Antenne kommt über den Ververstärker 16 zu dem umschaltbaren Bandpaßfilter 20 und
geht von dort über einen zusätzlichen (in Fig. 1 nicht gezeigten) Verstärker 21 zu der PLL 24.

Die PLL 24 enthält eine PLL-Schaltung 110, deren
Oszillatorausgang einem Teiler 112 zugeführt wird. Der
Ausgang des Teilers 112 wird über eine Leitung 26
einem zweiten Eingang des PLL-Schaltkreises 110 zugeführt. Der Teiler 112 bestimmt die positive ganze Zahl, mit der die Ausgangssignale der PLL-Schaltung 110 geteilt werden. Für die Bruchteile des Teilerverhältnisses ist eine zusätzliche Addierlogik 114 dem Teiler 112 nachgeschaltet, deren Ausgang einem Steuereingang (G) des Teilers 112 zugeführt wird. Hierdurch wird in der Praxis nach jedem Zyklus, der dem in der Addierlogik 114 eingestellten Wert entspricht, ein Zyklus "gestohlen", bzw. unterdrückt. Ist z.B. in der Addierlogik 114 der Wert 50 eingestellt, so wird jeweils nach dem 50ten Impuls ein Impuls unterdrückt.

Eine Verbindungsleitung 25 von der Addierlogik 114 zu dem Eingang I der PLL-Schaltung 110 dient einer Kompensation kleinerer Phasenfehler dadurch, daß ein Strom zu dem Eingang I des PLL-Kreises 110 injiziert wird.

Der Teiler 112 und die Addierlogik 114 sind jeweils einstellbar, wobei die entsprechenden Werte aus Tor-Registern 116 bzw. 118 stammen, die ihre Werte von einem Haupt-Datenbus 150 erhalten. Die Tor-Register 116 und 118 sind Bestandteile der Steuereinheit 68. Diese enthält weiterhin ein Torregister 120, das für die Einstellung des Bandpaßfilters 20 verantwortlich ist.

Der Speicher 38 ist wie folgt aufgebaut:
Die Ausgangssignale der PLL-Schaltung 110 gelangen über die Leitung 32 zu einem Dateneingang eines Schieberegisters 126, dessen Takteingang Taktimpulse von beispielsweise 10 MHz zugeführt werden. Der Ausgang des Schieberegisters 126 ist mit dem Eingang eines Pufferregisters 128 verbunden, dessen Ausgang mit einem RAM 124 verbunden ist.

Weiterhin ist ein Adressenzähler 122 vorgesehen, der mit dem Haupt-Datenbus 150 verbunden ist und an einem Takteingang die Taktimpulse mit beispielsweise 10 MHz empfängt. Nach 1024 Taktimpulsen (entsprechend der vorgegebenen Zeitdauer $t_v$) erscheint auf einer Leitung 134 ein Signal, das einem Flip-Flop 132 (R-Eingang) zugeführt wird. An dem S-Eingang dieses Flip-Flops 132 liegt das Lock-Signal von der Leitung 36 des PLL-Schaltkreises 110. Sobald dieses Lock-Signal an dem Flip-Flop 132 erscheint, geht dessen Q-Ausgang auf "High" worauf der Adressenzähler 122 zu zählen beginnt. Wie oben erwähnt, erscheint nach 1024 Zählschritten des Adressenzählers 122 auf der Leitung 134 ein "Start-Signal", das das Flip-Flop 132 in seinen anderen Zustand bringt, d.h. sein $\bar{Q}$-Ausgang geht auf "High". Dieses Signal wird als "Start-Signal" dem Zähler 44 zugeführt, d.h. einem Steuereingang eines schnellen 4-Bit-Zählers 136, dessen Takteingang wiederum das Taktsignal von beispielsweise 10 MHz zugeführt wird. Der Ausgang des schnellen Zählers 136 wird einem Takteingang eines 3 x 16 Bit Universalzählers 138 zugeführt, dessen Ausgang dem Haupt-Datenbus 150 zugeführt wird. Weiterhin ist der Ausgang des RAM 124 über einen Pufferspeicher 130 mit der Hauptdatenleitung 150 verbunden.

Das Schieberegister 126 ist ein "Serial-in-parallel-out"-Register. Dieses Register ist im Ausführungsbeispiel nur 4 Bits lang, so daß zur vollständigen Identifizierung einer vollständigen Impulsfolge eine Adressierung des RAMs 124 erforderlich ist, was durch den Adressenzähler 122 erfolgt. Der Grund für die Wahl dieser Schaltungsanordnung liegt darin, daß die RAMs vergleichsweise langsam arbeiten, so daß nur ein kurzes, jedoch schnelles Schieberegister benötigt wird. Zwischen das Schieberegister 126 und das RAM 124 ist noch ein Pufferspeicher 128 geschaltet, der aufgrund eines Impulses des Adreßzählers 122 auf der Leitung 125 den Inhalt des Registers 126 übernimmt und an das RAM 124 weiterleitet.

Der Ausgang des RAMs 124 ist über einen Datenbus mit einem Ausgabepuffer 130 verbunden, der seinerseits mit einem Haupt-Datenbus 150 verbunden ist.

Der Zähler 44 besteht aus einem schnellen Zähler 136, dessen Zähleingang die Taktimpulse von beispielsweise 10 MHz zugeführt werden. Wie erwähnt, ist ein Steuereingang des Zählers 136 mit einem Ausgang des Flip-Flops 132 verbunden, so daß der Zähler 136 nur dann zählt, wenn das "Start-Signal" an seinem Steuereingang liegt. Weiterhin enthält der Zähler 44 einen langsameren 3 x 16 Bit-Zähler 138, der dem schnellen Zähler 136 nachgeschaltet ist. Die Ausgänge des Zählers 138 sind mit dem Haupt-Datenbus 150 verbunden. Weiterhin ist der Zähler 136 über einen Datenbus mit dem Pufferspeicher 130 und damit ebenfalls mit dem Haupt-Datenbus 150 verbunden.

Mit 140 ist global eine Steuerung für die einzelnen Bauelemente gezeigt (Ablaufsteuerung).

Der Notsender 92 ist wie folgt aufgebaut:
Die Steuerung 94 ist als Flip-Flop realisiert, welches für das Ein/Aus-Signal 98 - über einen zwischengeschalteten Verstärker 142 - sorgt. Beim Notsendebetrieb arbeitet der Universalzähler 138 als Tongenerator mit zwei verschiedenen Frequenzen. Das entsprechende Tonsignal wird über die Leitung 97 über ein Tiefpaßfilter 144 einem Verstärker 146 zugeführt, an dessen Ausgang 99 das entsprechend codierte Signal erscheint. Der Verstärker 146 wird noch von dem Flip-Flop 94 gesteuert, d.h. ein- und ausgeschaltet.

Figur 4 ist über die Daten-Hauptleitung 150 mit Fig. 5 zu verbinden. Figur 4 zeigt den grundlegenden Aufbau der Datenverarbeitungseinheit, die nahezu in üblicher Weise aufgebaut ist, d.h. mit einer Zentraleinheit 160 (CPU), einem Oszillator 162 (10 MHz), mehreren Treibern 164, 166, 168, die jeweils mit dem Haupt-Datenbus 150 verbunden sind. An diesen Haupt-Datenbus ist auch ein RAM 170 angeschlossen, das die Daten enthält, d.h. insbesondere die Werte von $\omega_1$, $\omega_2$ .... sowie $\Delta\omega_1$, $\Delta\omega_2$ .... . Weiterhin ist ein PROM 172 vorgesehen, das das Programm, die Senderposition, Startinformation etc. enthält. In der Datenverarbeitungseinheit der Figur 4 werden die oben erwähnten Berechnungen durchgeführt.

Eine Stromversorgung 176 versorgt die einzelnen Bauteile mit Energie. Zusätzlich ist eine Batterie 178 vorgesehen, die für die Aufrechterhaltung der Gesamtfunktion des Systems dient, d.h. insbesondere für die Aufrechterhaltung der Speicherfunktion und des Betriebes einer Uhr 174. Diese Uhr sorgt in der Betriebsstellung LPWR des Betriebsartschalters 216 für die erwähnten Funktionen, d.h. dafür daß das Gerät in fest vorgegebenen Zeitabständen automatisch einschaltet, seine Messungen durchführt und dann wieder abschaltet.

Die oben beschriebenen Baugruppen sind jeweils als integrierte Schaltungen im Handel erhältlich. So kann als Zentraleinheit 160 ein 16 Bit-Schaltkreis vom Typ Intel 8086 verwendet werden, während für den Schaltkreis 174 der Typ Intel 8284 mit angeschlossenem 15 MHz-Schwingquarz geeignet ist.

Der PROM 172 kann aus vier ROM-Speichern vom Typ Intel 2332 mit jeweils vier Kilo Byte, d.h. mit 4000 Adressen zu jeweils 8 Bits bestehen.

Der RAM-Speicher 170 ist aus 16-Bit-CMOS-Bausteinen aufgebaut, die im Ruhezustand nur einen sehr geringen Strom von etwa 0,1 μA verbrauchen. Für diese Stromversorgung dient die Batterie 178, die den RAM 170 und den Schaltkreis 174 für mindestens 1 Jahr ungestört betreiben kann.

Das vorliegende Navigationssystem ist so ausgelegt, daß es im wesentlichen Signale für DECCA, LORAN-C, und OMEGA verarbeiten kann. Bei entsprechender Änderung des Programmes in dem PROM 172 können auch Satellitennavigationssignale verwendet werden.

Bei einem Start des Navigationssystems wird wie folgt vorgegangen:

a) Die zuletzt bekannte Position wird über das Tastenfeld 214 in den RAM-Speicher 170 eingespeichert,

b) es wird versucht, die am nächsten gelegene bekannte Sendekette zu dieser Postion zu finden,

c) der Empfänger tastet die Sendesignale dieser Kette ab und versucht, möglichst alle Sender zu empfangen,

d) wenn kein Signal oder ein ungeeignetes Signal von der am nächsten gelegenen Kette erhalten wird, wird die nächstmögliche Kette untersucht, usw.....,

e) das Navigationssystem arbeitet dann gleichzeitig mit einer oder mehreren Senderketten, wobei es der besten bzw. am nächsten gelegenen Kette die höchste Priorität gibt,

f) unter Verwendung von einem oder mehreren gemessenen und errechneten Schiffsorten werden diese mit dem aus der zuletzt bekannten Position, der Geschwindigkeit und dem Kurs ermittelten vorberechneten Schiffsort verglichen, wobei für weitere Messungen und Berechnungen der aus dem Vergleich ermittelte Schiffsort verwendet wird.

Die Darstellung der Daten erfolgt mittels einer alphanumerischen Anzeige, vorzugsweise in Form geographischer Koordinaten, die direkt in eine Seekarte übertragen werden können. Wie oben erwähnt, können die Werte jedoch auch über einen gesonderten Modul in Form eines Lichtpunktes ausgegeben werden, wobei dieser Lichtpunkt die Position auf einer Seekarte direkt bezeichnet.

Das Navigationssystem arbeitet im Echtzeitbetrieb, so daß viele Programmfunktionen gleichzeitig ablaufen können, ohne sich gegenseitig zu stören.

CETAB

Rosenlundsgatan 5

S-20041 Malmö/Schweden

27. Juli 1982

1848

Patentansprüche

1. Ortungsverfahren, bei dem ortsabhängige Phasendifferenzen zwischen elektromagnetischen Wellen von mehreren, in fester Phasenbeziehung zueinander sendenden Sendern ermittelt werden, indem die ankommenden Wellen der einzelnen Sender zeitlich nacheinander abgetastet werden und senderweise die Phasenlagen der während einer vorgegebenen Zeitdauer auftretenden Nulldurchgänge gegenüber einem Bezugssignal gemessen werden, wobei aus der Differenz der ermittelten Phasenlagen der einzelnen Sender hyperbelförmige Standlinien erhalten werden,

d a d u r c h   g e k e n n z e i c h n e t , daß die Phasenlagen aller während der jeweils vorgegebenen Zeitdauer auftretenden Nulldurchgänge eines entsprechenden Senders gegenüber einem vorgegebenen Bezugszeitpunkt gemessen werden, und daß aus diesen Phasenlagen ein Mittelwert der kongruent modulo der Periodendauer der abgetasteten Wellen liegenden Phasenlagen gebildet wird.

2. Ortungsverfahren nach Anspruch 1, d a d u r c h g e k e n n z e i c h n e t , daß die Umschaltzeitdauer für das Umschalten auf einen anderen Sender gemessen wird, daß für die Messung der Phasenlagen der Wellen des anderen Senders ein neuer Bezugszeitpunkt gewählt wird, der dem Ende der Umschaltzeitdauer entspricht und daß eine Zeittransformation des neuen Bezugszeitpunktes auf den zuerst gewählten Bezugszeitpunkt durchgeführt wird.

3. Ortungsverfahren nach Anspruch 1 oder 2, wobei wechselseitige Schnittpunkte der hyperbelförmigen Standlinien ermittelt werden, d a d u r c h g e k e n n - z e i c h n e t , daß eine gewichtete Mittelwertbildung der Schnittpunkte durchgeführt wird, wobei hyperbelförmige Standlinien, die auf Messungen basieren, bei denen die Abweichung der einzelnen Phasenlagen vom Mittelwert groß war, ein geringeres Gewicht zugeordnet wird, als hyperbelförmigen Standlinien, die auf Messungen basieren, bei denen die Abweichungen der einzelnen Phasenlagen vom Mittelwert klein waren.

4. Ortungsverfahren nach Anspruch 3, d a d u r c h g e k e n n z e i c h n e t , daß zusätzlich zur gewichteten Mittelwertbildung der Schnittpunkte ein aus früherem Standortf, Kurs, Geschwindigkeit und verstrichener Zeit ermittelter Standort verwendet wird.

5. Ortungsgerät zur Durchführung des Verfahrens nach einem der Ansprüche 1 bis 4, mit einem einstellbaren Empfänger, einem Bezugssignalgeber und einer Phasenmeßeinrichtung, die die Phase der empfangenen Signale mit einem Bezugssignal vergleicht, mit einem Speicher, in welchem die von der Phasenmeßeinrichtung ermittelten Vergleichssignale gespeichert werden, mit einem dem Speicher nachgeschalteten Rechner, der aus den gespeicherten Vergleichssignalen Differenzsignale der Phasen verschiedener Sender bildet und mit einer Steuereinrichtung, die den Empfänger auf den Empfang anderer Sendersignale umschaltet, d a d u r c h   g e k e n n z e i c h n e t, daß in den Speicher (38) die empfangenen Signale ab einem gewählten Bezugszeitpunkt ($t_0$, $t_1$...) für eine vorgegebene Zeitdauer ($t_v$) mit einer gegenüber der Frequenz der empfangenen Signale hohen Frequenz eingelesen werden,

daß dem Speicher (38) ein Rechner (54) nachgeschaltet ist, in welchem aus den gespeicherten Signalen die Phasenlagen der Nulldurchgänge der Signale gegenüber dem gewählten Bezugszeitpunkt ermittelt werden und in welchem aus kongruent modulo der Wellenlänge der empfangenen Signale ein Mittelwert der Phasenlage ermittelt und gespeichert wird,

daß ein Zähler (44) vorgesehen ist, der während der Umschaltzeitdauer ($N_2$) zwischen Ablauf der vorbestimmten Zeitdauer ($t_v$) und dem Beginn einer neuen Messung ($t_1$) nach dem Umschalten des Empfängers Impulse konstanter Frequenz zählt,

wobei der Ausgang des Zählers (44) mit dem Rechner (54) verbunden ist und wobei der Rechner aus den nach dem Umschalten gespeicherten Signalen und dem Inhalt des Zählers (44) in analoger Weise den Mittelwert der Phasenlage der anderen Signale ermittelt, speichert und die Differenz der gespeicherten Phasenmittelwerte bildet.

6. Ortungsgerät nach Anspruch 5, g e k e n n z e i c h - n e t durch eine einstellbare, dem Speicher (38) und dem Zähler (44) vorgeschaltete phasenstarre Schleife (24, 26, 28), deren Eingang die empfangenen Signale zuführbar sind, wobei ein Ausgang (30) der phasenstarren Schleife (24) mit einem Dateneingang (40) des Speichers (38) verbunden ist und wobei ein zweiter Ausgang (34) der phasenstarren Schleife (24), der ein den Verriegelungszustand der phasenstarren Schleife (24) anzeigendes Signal führt, mit einem Sperreingang (46) des Zählers (44) verbunden ist, dessen Starteingang (52) mit einem Ausgang (50) des Speichers (38) verbunden ist, der ein Signal führt, das anzeigt, daß ein vorgegebener Speicherinhalt erreicht ist.

7. Ortungsgerät nach Anspruch 6, d a d u r c h  g e - k e n n z e i c h n e t , daß der Speicher (38) folgendes enthält:

- ein mit dem Ausgang der phasenstarren Schleife (24) verbundenes Schieberegister (126),
- ein dem Schieberegister (126) nachgeschaltetes Pufferregister (128),
- einen dem Pufferregister (128) nachgeschalteten RAM-Speicher (124) mit einem Adressenzähler (122), wobei dem Schieberegister (126) und dem Adressenzähler (122) jeweils Taktimpulse zuführbar sind, und
- ein Flip-Flop (132), dessen einer Steuereingang (S-Eingang) mit dem den Verriegelungszustand anzeigenden Ausgang (36) der phasenstarren Schleife (24) verbunden ist, dessen anderer Steuereingang (R-Eingang) mit einem Ausgang (134) des Adressenzählers (122) verbunden ist, dessen einer Ausgang (Q) mit einem Bereitsetzeingang (G) des Adressenzählers (122) verbunden ist und dessen anderer Ausgang ($\bar{Q}$) mit einem Bereitsetzeingang des Zählers (44) verbunden ist, wobei an dem Ausgang (134) des Adressenzählers (122) dann ein Signal erscheint, wenn im Adressenzähler (122) eine vorbestimmte Anzahl von Taktimpulsen gezählt wurde.

8. Ortungsgerät nach den Ansprüchen 6 oder 7, d a - d u r c h  g e k e n n z e i c h n e t , daß ein Ausgang des Zählers (44) mit einer Notsendeeinrichtung (92) verbunden ist, die ein Tiefpaßfilter (144), einen Verstärker (146) und eine Steuereinrichtung (94) enthält, wobei der Zähler (44) zusätzlich als Tonfrequenzgenerator für die Notsendeeinrichtung (92) dient.

_Fig.1_

0071231

215    0071231

_Fig 2_

ON
LPWR
OFF

_Fig 3_

Fig. 4

Fig 5

0071231

Fig 6

1/m Zyklus

$t_v$

$t_{13}$

$t_{12}$

$t_{11}$

$t_{10}$

$2\pi/\omega_n = 1/f_1$

$N_2$
(Zähler 44)

$t_{22}$

$t_{21}$

$t_{20}$

$1/f_2$

$U_0$

$U$

$t$ [100ms]

$t_0$

1024

$t_1 = 1024 + N_2$

5/5

0071231

## EINSCHLÄGIGE DOKUMENTE

EP 82106745.1

| Kategorie | Kennzeichnung des Dokuments mit Angabe soweit erforderlich der maßgeblichen Teile | Betrifft Anspruch | KLASSIFIKATION DER ANMELDUNG (Int. Cl. ³) |
|---|---|---|---|
| X | <u>DE - A1 - 2 444 676</u> (UNIVERSITY COLLEGE OF NORTH WALES)<br>  * Fig. 1-4; Seite 10, Zeile 1 - Seite 15, Zeile 27 *<br>  -- | 1 | G 01 S 1/32<br>G 01 S 5/10<br>G 01 S 1/30 |
| A | <u>US - A - 4 063 244</u> (VAN DE KOP)<br>  * Fig. 2, 7A; Zusammenfassung *<br>  -- | 1 | |
| A | <u>US - A - 4 066 952</u> (LEY)<br>  * Fig.; Zusammenfassung; Spalte 5, Zeile 50 - Spalte 6, Zeile 41 *<br>  -- | 1 | |
| A | <u>EP - A1 - 0 006 448</u> (SIEMENS)<br>  * Anspruch 1; Fig. 5 *<br>  -- | 1,4 | |

| | | | **RECHERCHIERTE SACHGEBIETE (Int. Cl. ³)** |
|---|---|---|---|
| D,A | PROCEEDINGS OF THE SECOND OMEGA SYMPOSIUM, November 1974, The Institute of Navigation, Washington<br>KENT CHAMBERLIN "Binary Phase Locked Loops for Omega Receivers" Seiten 154-158<br>  * Fig. 1; Zusammenfassung *<br>  -- | 1 | G 01 S  1/00<br>G 01 S  5/00<br>G 01 R 25/00 |
| D,A | <u>US - A - 4 138 680</u> (DE LORME)<br>  * Fig. 1-3; Spalte 2, Zeile 30 - Spalte 5, Zeile 35 *<br>  ---- | 1 | |

Der vorliegende Recherchenbericht wurde für alle Patentansprüche erstellt.

| Recherchenort<br>WIEN | Abschlußdatum der Recherche<br>06-12-1982 | Prüfer<br>DRÖSCHER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument